# EUROPÄISCHE PATENTSCHRIFT

(11) **EP 2 034 106 B1**
(45) Veröffentlichungstag und Bekanntmachung des Hinweises auf die Patenterteilung: **16.02.2011**
(21) Anmeldenummer: 08015526.0
(22) Anmeldetag: 03.09.2008
(51) Int. Cl.: E04F 15/02, F16B 5/00

(54) **Einrichtung zur Verbindung und Verriegelung zweier Bauplatten, insbesondere Fußbodenpanelle**
System for connecting and sealing two structural panels, in particular floor panels
Dispositif de raccordement et de fermeture de deux panneaux de construction, en particulier de panneaux de sol

(30) Priorität: 06.09.2007 DE 102007042250
(43) Veröffentlichungstag der Anmeldung: 11.03.2009
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- WO-A-2008/004960
- US-A1- 2007 006 543

## Beschreibung

Die Erfindung betrifft eine Einrichtung zur Verbindung und Verriegelung zweier Bauplatten, insbesondere Fußbodenpaneele, an ihren Längs- und/oder Querseiten in horizontaler und vertikaler Richtung durch eine im Wesentlichen vertikale Fügebewegung, wobei die Bauplatten eine Oberseite und eine Unterseite aufweisen, an ihren miteinander zu verbindenden Seitenkanten mit zueinander korrespondierenden Profilierungen versehen sind und in der Profilierung der ersten Bauplatte ein Verriegelungselement mit einem Verriegelungsvorsprung vorgesehen ist, das mit einer in der Profilierung der zweiten Bauplatte vorgesehenen Verriegelungsvertiefung derart zusammenwirkt, dass bei der Fügebewegung die beiden Bauplatten selbsttätig in vertikaler Richtung verriegelt werden, wobei das Verriegelungselement im Wesentlichen starr ausgebildet ist und der Verriegelungsvorsprung durch eine Drehbewegung des Verriegelungselements in die Verriegelungsvertiefung bringbar ist.

Eine solche Einrichtung ist beispielsweise aus der US 2007/0006543 A1 bekannt. Das hier offenbarte Verriegelungselement ist im Wesentlichen L-förmig ausgebildet. Es wird in die Profilierung einer Seitenkante eines Fußbodenpaneels eingesetzt, so dass einer seiner Schenkel in einem Winkel zur Horizontalen verläuft. Das neue anzulegende Paneel wird auf das Niveau des ersten Paneels abgesenkt und drückt dabei auf diesen Schenkel, so dass sich das Verriegelungselement dreht und der Verriegelungsvorsprung in eine dafür vorgesehene Ausnehmung in der Seitenkante des neu angelegten Paneels eingreift.

Eine weitere Einrichtung ist beispielsweise aus der EP 1 415 056 B1 bekannt und erlaubt das Zusammenfügen zweier Fussbodenpaneele an deren Querseiten. An der Längsseiten werden die Paneele durch eine aus den Seitenkanten heraus gefräste Feder-Nut-Profilierung verbunden. Die Feder des neu anzulegenden Paneels wird dabei in die Nut eines bereits verlegten Paneels eingefügt und das neu anzulegende Paneel dann auf den Unterboden herabgeschwenkt. An der Querseite erlaubt die Einrichtung das einfache Zusammenfügen der Paneele durch Einfügen in vertikaler Richtung mit einem abschließenden leichten Eindrücken, wobei dann der Verriegelungsvorsprung in die Verriegelungsnut einrastet. Die Verriegelung an der Querseite in horizontaler Richtung erfolgt durch eine hakenförmige Profilierung der Seitenkanten, die aus dem vollen Material heraus gefräst ist. In vertikaler Richtung werden die beiden Paneele durch den Kunststoffeinsatz verriegelt, der fest in der Profilierung der einen Bauplatte eingesetzt ist und eine seitlich abstehende federnde Lippe aufweist, die in einen Hinterschnitt, der in der Profilierung der zweiten Bauplatte (der gegenüberliegenden Seitenkante) eingearbeitet ist, einrastet.

Die Verbindung des Kunststoffeinsatzes mit der Profilierung des ersten Paneels erfolgt durch einen in horizontaler Richtung verlaufenden Steg, der in eine horizontal in die Seitenkante eingebrachte Nut eingesetzt wird. Die von dem Verriegelungselement abstehende Verriegelungslippe wird durch das neu anzulegende Paneel bei der Fügebewegung zusammengedrückt und federt wieder aus, wenn sie in Überdeckung mit dem Hinterschnitt gelangt. Die Federlippe muss recht elastisch sein, damit das selbsttätige Verrasten sicher erfolgt. Je elastischer die Federlippe ausgestaltet ist, umso geringer sind die von ihr in die entgegengesetzte Richtung aufnehmbaren Kräfte (so genannte Auszugskräfte) die gegen die Fügerichtung wirken und die Verbindung lösen. Handelsübliche Fußbodenpaneele haben eine Stärke von 6 bis 12 mm. Die seitlich in die Profilierung der Seitenkante einzubringende Nut, in der der Kunststoffeinsatz befestigt wird, muss folglich in einer Breite von 2 bis 3 mm und einer Tiefe von ca. 5 mm gefräst werden. Der 1,5 bis 3 mm dicke Kunststoffeinsatz muss dann in die Nut eingesetzt werden. Beide Arbeitsschritte müssen bei hohen Maschinengeschwindigkeiten erfolgen, was nicht unproblematisch ist. Durch die Stärke des Kunststoffeinsatzes ist die vertikale Verriegelung auf Laminatfußböden mit Stärken von größer als 10 mm begrenzt, was die Einsetzbarkeit des Verriegelungssystems weiter eingeschränkt.

Wenn zur Verriegelung eine hohe Elastizität notwendig ist, wird zum einen die Materialauswahl stark eingeschränkt, was zu erhöhten Kosten oder zu erhöhtem Fertigungsaufwand führen kann. Hohe Federkräfte der Verriegelungselemente werden dann notwendig, wenn eine sichere und dauerhafte Verriegelung gewährleistet werden soll. Da dies generell der Fall bei hochwertigen Verbindungen ist, sind die erzeugten Kräfte und Verformungen meist entsprechend hoch. Für Laminat-Fußbodenpaneele wird eine Trägerplatte aus einem Holzwerkstoff, insbesondere HDF oder MDF verwandt. Wirken auf einen Schichtstoff, wie HDF, hohe Kräfte auf kleine Bereiche längs zur Schichtrichtung, treten sehr schnell Beschädigungen, insbesondere in verjüngten Bereichen auf. Dies kann dazu führen, dass Verbindungen nicht vollständig oder überhaupt nicht verriegeln. Weiterhin führen die meist großen Verformungen der Verriegelungselemente oft zu einer Schwächung, insbesondere dann, wenn die Verformung den elastischen Bereich überschreitet oder die Verformung längere Zeit andauert. Dies kann zu verminderten Rückstellkräften der Verriegelungselemente und damit zu nur unvollständigen Arretierungen führen.

Von dieser Problemstellung ausgehend soll eine gattungsgemäße Einrichtung zur Verbindung und Verriegelung zweier Bauplatten so verbessert werden, dass einerseits ihre Herstellung vereinfacht und andererseits das Verriegelungselement gegen Herausfallen gesichert wird.

Zur Problemlösung zeichnet sich eine gattungsgemäße Einrichtung dadurch aus, dass das Verriegelungselement im Querschnitt im Wesentlichen kreisförmig ausgebildet ist.

Durch diese Ausgestaltung bedarf es zur Verriegelung der Paneele keiner federnden Mittel. Durch die drehende Bewegung erfolgt eine sichere Verriegelung, die hohe Auszugskräfte gewährleistet.

Das Verriegelungselement ist bei der erfindungsgemäßen Ausführungsform im Querschnitt im Wesentlichen kreisförmig ausgebildet. Bei dieser Ausgestaltung ist die Profilierung an der Seitenkante der ersten Bauplatte so ausgebildet, dass das Verriegelungselement in einer im Wesentlichen halbzylindrischen Nut angeordnet ist.

Vorteilhaft ist es, wenn der Verriegelungsvorsprung formschlüssig in der Verriegelungsvertiefung aufnehmbar ist, und insbesondere vorteilhaft ist es, wenn der Verriegelungsvorsprung und die Verriegelungsvertiefung eine Verriegelungsfläche aufweisen, die im verriegelten Zustand der Bauplatten aneinander anliegen, und dann beide Verriegelungsflächen im Wesentlichen parallel zur Oberseite verlaufen.

Da das Verriegelungselement im Querschnitt kreisförmig ausgebildet ist, weist der Verriegelungsvorsprung vorzugsweise einen Rastabsatz auf, der an der Seitenkante der ersten Bauplatte anliegt, in der die im Wesentlichen halbzylindrische Nut angeordnet ist, wenn die Verriegelungsflächen an einander anliegen, und der das Verriegelungselement gegen ein Zurückdrehen blockiert.

Das Verriegelungselement kann in seiner Nut mit einer Haftklebeverbindung gegen ein unbeabsichtigtes Verdrehen gesichert sein. Die Adhäsionskräfte der Klebverbindung müssen natürlich so gewählt sein, dass das durch die Fügebewegung auf das Verriegelungselement einwirkende Drehmoment ausreichend hoch ist, um die Klebverbindung zu lösen und sichergestellt werden kann, dass sich das Verriegelungselement verdreht. Der Winkel α der kernnahen Wandung beträgt vorzugsweise 70° gegenüber der Horizontalen.

Wenn das Verriegelungselement in dem Bereich, in dem die beiden Schenkel aneinander angrenzen einen nach außen weisenden Vorsprung aufweist, kann dieser den Drehpunkt für das Verriegelungselement bilden.

Vorzugsweise ragt der Vorsprung über die volle Länge des Verriegelungselementes und kann insbesondere vorzugsweise im Wesentlichen zylinderförmig ausgebildet sein.

Wenn im Grund der Profilierung der ersten Bauplatte eine Vertiefung vorgesehen ist, in die der Vorsprung des Verriegelungselementes eingreift, kann sichergestellt werden, dass die Drehbewegung des Verriegelungselementes auf einem Kreisbogen stattfindet, weil das Verriegelungselement ortsfest innerhalb der Profilierung gehalten werden kann.

Eine kostengünstige Herstellung des Verriegelungselementes ist gewährleistet, wenn dieses aus Kunststoff oder einem Holzwerkstoff-Kunststoff-Gemisch besteht und im Spritzguss hergestellt werden kann. Selbstverständlich kann die Herstellung des Verriegelungselementes auch im Extrusionsverfahren erfolgen. Wenn das Verriegelungselement aus Metall besteht, kann es in einem Umformverfahren, beispielsweise durch Walzen, hergestellt werden.

Zum Lösen der vertikalen Verriegelung ist bevorzugt vorgesehen, dass von der Seite in die Verriegelungsausnehmung ein stabförmiges Element einschiebbar ist, das einen Schenkel des Verriegelungselementes aufspreizt und diesen somit außer Eingriff mit der Verriegelungsvertiefung bringt.

Wenn an der Innenkante, an der die Schenkel des Verriegelungselementes aneinander angrenzen, ein Freistich vorgesehen ist, kann durch geeignete Auswahl der Größe (Durchmesser) des Freistichs die Elastizität des zum Lösen der Verbindung abspreizbaren Schenkels eingestellt werden.

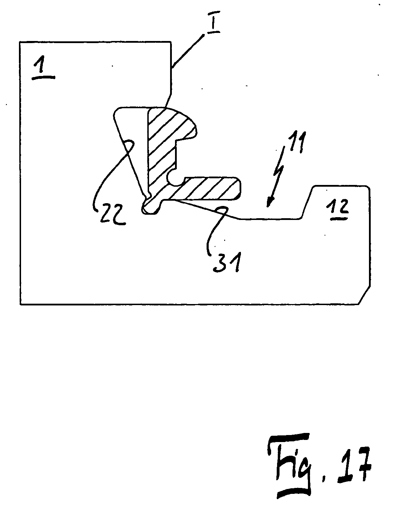

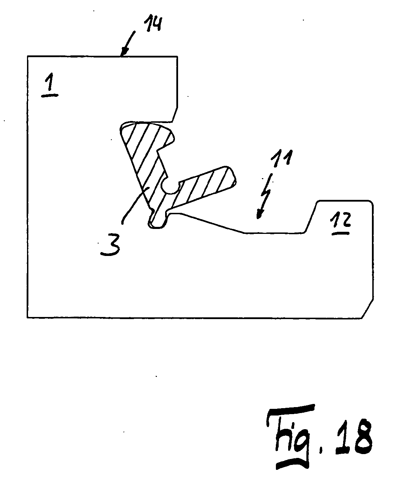

Mit Hilfe einer Zeichnung sollen anhand der Figuren 19 bis 26 zwei Ausführungsbeispiele der Erfindung beschrieben werden. Figuren 1 bis 18 zeigen keine erfindungsgemäße Ausgestaltung eines Verriegelungselementes. Es zeigt:
- Figur 1 -: zwei Bauplatten an der Verbindungsstelle in Teilansicht mit einem ersten Verriegelungselement gemäß dem Stand der Technik zu Füge-Beginn;
- Figur 2 -: die Darstellung nach Figur 1 bei weiter fortgeschrittener Verbindung der Bauplatten;
- Figur 3 -: die Darstellung nach Figur 1 zu Beginn der Verriegelung;
- Figur 4 -: die Darstellung nach Figur 1 bei weiter fortgeschrittener Verriegelung der Bauplatten;
- Figur 5 -: die Darstellung gemäß Figur 1 bei vollständiger Verbindung und Verrie- gelung der beiden Bauplatten;
- Figur 6 -: zwei Bauplatten an der Verbindungsstelle in Teilansicht mit einem Ent- riegelungselement;
- Figur 7 -: eine zu Figur 1 analoge Darstellung mit einem zweiten Verriegelungs- element gemäß dem Stand der Technik;
- Figur 8 -: eine zu Figur 2 analoge Darstellung mit dem zweiten Verriegelungsele- ment;
- Figur 9 -: eine zu Figur 4 analoge Darstellung mit dem zweiten Verriegelungsele- ment;
- Figur 10 -: eine zu Figur 5 analoge Darstellung mit dem zweiten Verriegelungsele- ment;
- Figur 11 -: eine zu Figur 1 analoge Darstellung bei einem weiteren Ausführungsbei- spiel aus dem Stand der Technik;
- Figur 12 -: eine zu Figur 2 analoge Darstellung bei dem weiteren Ausführungsbei- spiel;
- Figur 13 -: eine zu Figur 3 analoge Darstellung bei dem weiteren Ausführungsbei- spiel;
- Figur 14 -: eine zu Figur 4 analoge Darstellung bei dem weiteren Ausführungsbei- spiel;
- Figur 15 -: eine zu Figur 5 analoge Darstellung bei dem weiteren Ausführungsbei- spiel;
- Figur 16 -: das Einbringen des Verriegelungselementes nach dem ersten Ausfüh- rungsbeispiel in einem ersten Schritt;
- Figur 17 -: das Einbringen des Verriegelungselementes nach dem ersten Ausfüh- rungsbeispiel in einem zweiten Schritt;
- Figur 18 -: das Einbringen des Verriegelungselementes nach dem ersten Ausfüh- rungsbeispiel in einem dritten Schritt;
- Figur 19 -: zwei Bauplatten an der Verbindungsstelle in Teilansicht mit einem erfin- dungsgemäßen Verriegelungselement zu Fügebeginn;
- Figur 20 -: die Darstellung nach Figur 19 bei weiter fortgeschrittener Verbindung der Bauplatten;
- Figur 21 -: die Darstellung nach Figur 19 zu Beginn der Verriegelung;
- Figur 22 -: die Darstellung nach Figur 19 bei weiter fortgeschrittener Verriegelung der Bauplatten;
- Figur 23 -: zwei Bauplatten an der Verbindungsstelle in Teilansicht mit einem weite- ren erfindungsgemäßen Verriegelungselement;
- Figur 24 -: die Darstellung nach Figur 23 zu Beginn der Verriegelung;
- Figur 25 -: die Darstellung nach Figur 23 bei weiter fortgeschrittener Verriegelung;
- Figur 26 -: die Darstellung gemäß Figur 23 bei vollständiger Verbindung und Verrie- gelung der beiden Bauplatten.

Die Erfindung soll für Fußbodenpaneele erläutert werden, die über die erfindungsgemäße Einrichtung sowohl an ihren Längsseiten als auch an ihren Querseiten oder aber auch nur an einer Seite miteinander verbunden werden können. Vorgesehen ist die Einrichtung zur Verbindung von Paneelen an ihren Querseiten. Die Längsseiten werden vorzugsweise durch Einwinkeln eines neuen Paneels in ein bereits am Boden liegendes Paneel und anschließendes Absenken auf den Unterboden verbunden. Die Fügebewegung an der Querseite erfolgt dann im Wesentlichen in vertikaler Richtung.

Wie die Zeichnung erkennen lässt, sind die Paneele 1, 2 an ihren Seitenkanten I, II mit zueinander korrespondierenden hakenförmigen Profilierungen 10, 11 versehen. Auch wenn hier von einem ersten und einem zweiten Paneel gesprochen wird, ist jedes Paneel 1, 2 selbstverständlich identisch profiliert und die Profilierungen 10, 11 korrespondieren zueinander. Das Paneel 1 ist ausgehend von seiner Oberseite 14 profiliert und das Paneel 2 ist von seiner Unterseite 15 ausgehend profiliert. Die Profilierungen 10, 11 sind stufenförmig ausgebildet, so dass in der Profilierung 11 des ersten Paneels 1 eine nach oben offene Nut 24 mit einer sich in Richtung des Kerns 17 erstreckenden Hinterschneidung 25 ausgebildet ist. Die Profilierung 10 an dem

Paneel 2 bildet einen in Richtung der Unterseite 15 ragenden Absatz 8 und eine quer in die Seitenkante II eingebracht Nut 7 aus. Die dem Kern 17 zugewandte Wandung 22 der Hinterschneidung 25 verläuft in einem Winkel α von etwa 20° zur Vertikalen geneigt. An ihrem unteren Ende geht die Wandung 22 in einen Freistich 18 über, der über die volle Länge des Paneels 1 ausgebildet ist.

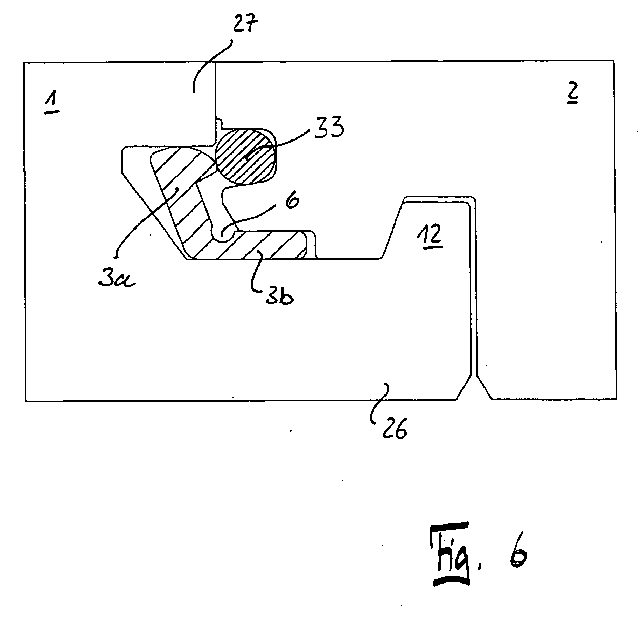

Das im Wesentlichen starre Verriegelungselement 3 ist im Querschnitt L-förmig ausgebildet und weist die beiden Schenkel 3a, 3b auf, die im Wesentlichen rechtwinklig zueinander verlaufen. Starr im Sinne der Erfindung bedeutet, dass die Schenkel 3a, 3b nicht zueinander federnd ausgebildet sind. Wobei natürlich grundsätzlich mögliche elastische Verformungen in Abhängigkeit des Materials (z. B. Kunststoff) tolerabel sind. An seinem oberen Ende ist der Schenkel 3a mit einem Vorsprung 4 versehen, dessen Unterseite im Wesentlichen parallel zum unteren Schenkel 3b verläuft und eine Verriegelungsfläche 13 ausbildet. An ihrem inneren Übergang sind die Schenkel 3a, 3b, wie in Figur 6 dargestellt, freigestochen. Am äußeren Übergang der Schenkel 3a, 3b weist das Verriegelungselement 3 einen zylinderförmigen Vorsprung 5 auf, mit dem das Verriegelungselement 3 im Freistich 18 der Nut 24 eingesetzt und somit ortsfest gehalten ist.

Das Verriegelungselement 3 kann werksseitig in das Paneel 1 eingesetzt sein oder manuell beim Verlegen in die Nut 24 eingelegt werden. Wird das Verriegelungselement 3 werksseitig eingesetzt, liegt es mit seinem Schenkel 3a an der im Winkel α geneigten Wandung 22 an und ist dort mit einem leicht lösbaren Haftkleber befestigt, damit sichergestellt ist, dass es beim Transport in dieser Lage bleibt.

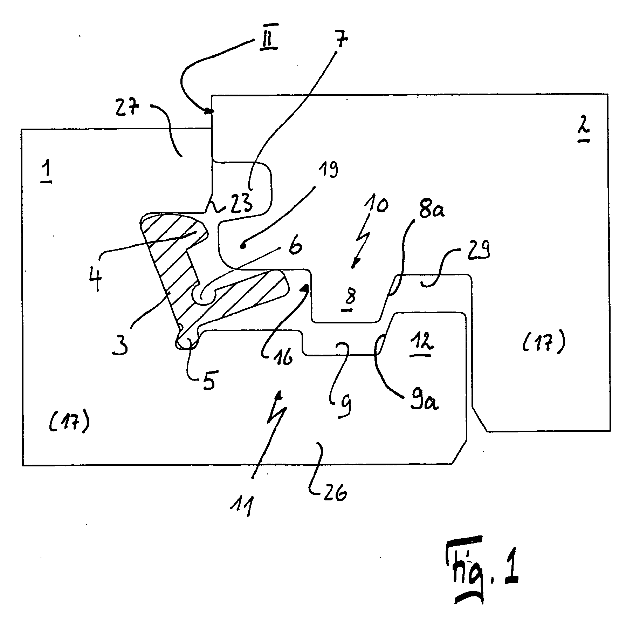

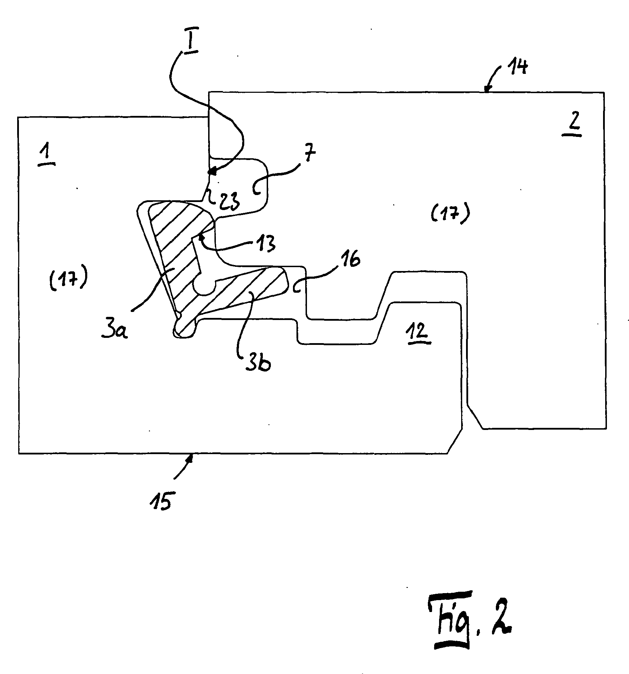

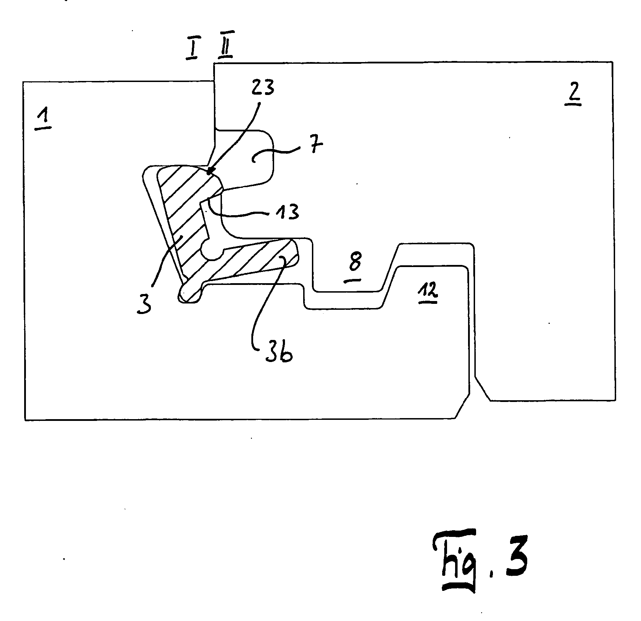

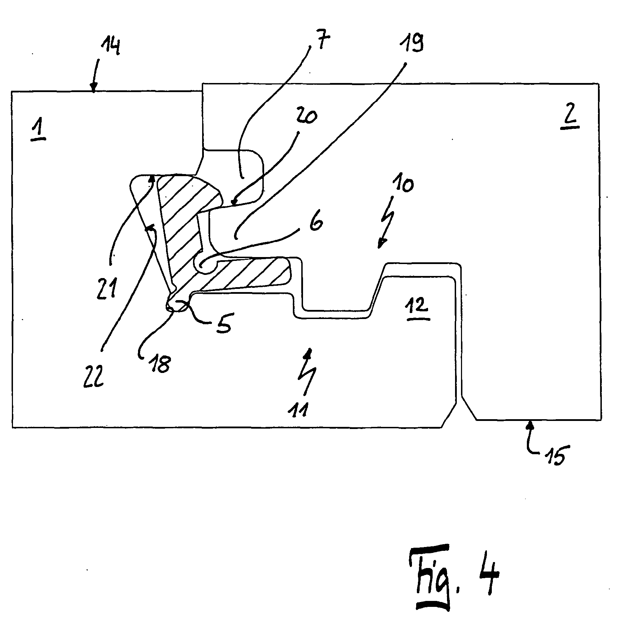

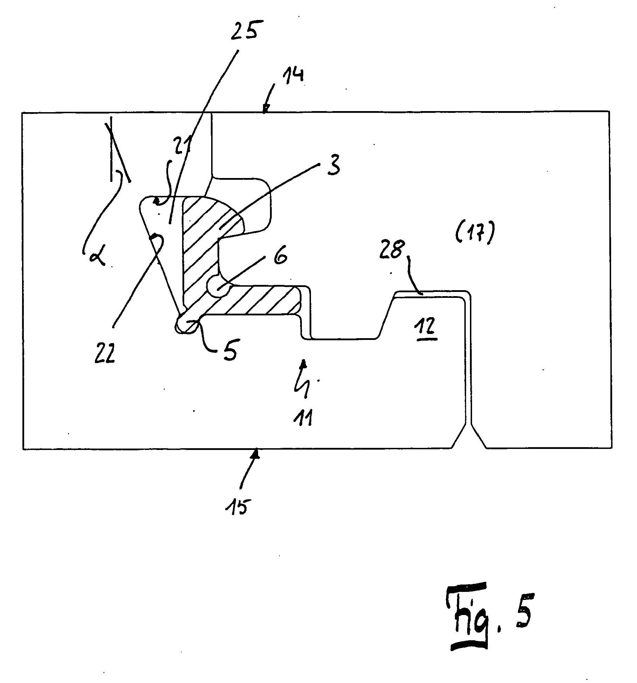

Wird das Paneel 2 zum Paneel 1 abgesenkt, gelangt, wie Figur 1 zeigt, die Unterseite der Unterlippe 19 der von einer im Querschnitt rechteckigen Nut gebildeten Verriegelungsvertiefung 7 in Kontakt mit dem Schenkel 3b des Verriegelungselementes 3. Wie die Figuren 2 bis 5 erläutern, wird durch die Fügebewegung das Verriegelungselement 3 auf einer Kreisbahn um den zylinderförmigen Vorsprung 5 herum geschwenkt, bis der Vorsprung 4 in die Nut 7 eingreift und die Verriegelungsfläche 13 des Verriegelungselementes 3 mit der Verriegelungsfläche 20 der Nut 7 in Kontakt ist. Der untere Schenkel 3b liegt dann passend in der Nut 16, die zusammen mit der Profilierung 11 einen geschlossenen Raum ausbildet. Das Verriegelungselement 3 stützt sich an der Unterlippe 26 und der Wandung 21 der Oberlippe 27 bzw. des Hinterschnitts 25 ab. Um bei der Drehbewegung des Verriegelungselementes 3 an der Wandung 21 möglichst keine Reibungskräfte entstehen zu lassen, ist die Oberseite des Vorsprungs 4 bis zur Verriegelungsfläche 13 hin bogenförmig ausgebildet. Im verriegelten Zustand (Figur 5) stützt sich der Vorsprung 8 des zweiten Paneels 2 in der Vertiefung 9 der Nut 24 des ersten Paneels 1 ab. Die Verriegelung in horizontaler Richtung erfolgt durch die im selben Winkel verlaufenden Wandungen 8a des Vorsprungs 8 bzw. 9a der Vertiefung 9 bzw. des Vorsprungs 12, die aneinander anliegen. Zwischen dem nach oben ragenden Vorsprung 12 an der Unterlippe 26 und der den Vorsprung 8 ausbildenden Vertiefung 29 ist ein Freiraum 28 ausgebildet.

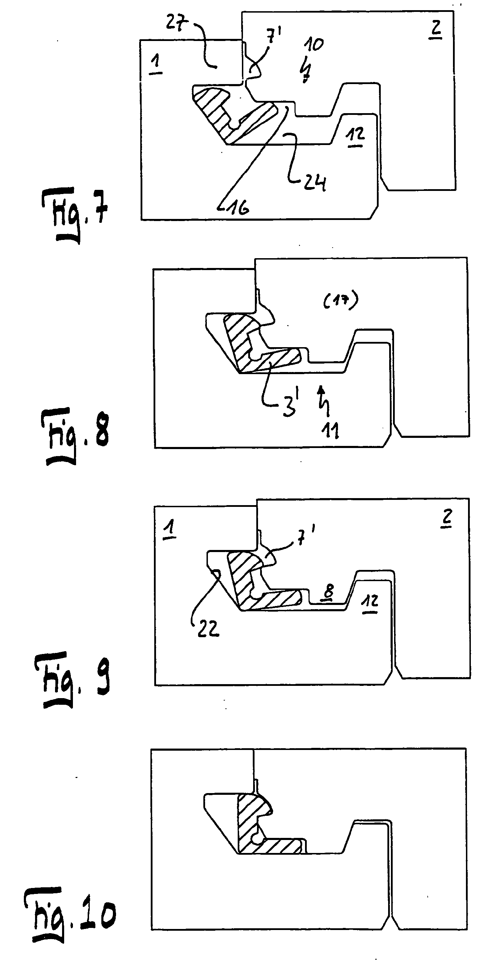

Figuren 7 bis 10 zeigen ein Verriegelungselement 3', das ohne einen Vorsprung für die ortsfeste Fixierung in der Nut 24 ausgebildet ist. Die Nut 7' in der Profilierung 10 ist nicht so ausgeprägt wie die zuvor beschriebene Nut 7 im Paneel 2. Wie Figur 10 zeigt, wird der Verriegelungsvorsprung 4 bei völlig verriegelten Paneelen 1, 2 nahezu formschlüssig in der Verriegelungsvertiefung 7'aufgenommen. Die Art der horizontalen und vertikalen Verriegelung ist aber identisch. Der Verriegelungsmechanismus verläuft gleich, so dass es hier keiner weiteren Beschreibung bedarf.

Mit der besonderen Ausgestaltung des Verriegelungselementes 3, 3' wird erreicht, dass die Auszugskräfte, also die Kräfte, die am Paneel 2 entgegen der Fügerichtung wirken müssen, um die Verbindung zu lösen, wesentlich größer sind, als die Fügekräfte. Bei der Drehbewegung des Verriegelungselementes 3, 3' beim Fügevorgang wirkt der Schenkel 3b über seine volle Länge als Hebelarm um den Drehpunkt des Vorsprungs 5 (vgl. Figur 1). Das Verriegelungselement 3, 3' liegt in der verriegelten Stellung sowohl unten in der Nut 24 als auch an der Wandung 21 der Oberlippe 27 an. Beim gewaltsamen Entriegeln werden die Kräfte über die Unterlippe 19 auf den Vorsprung 4 aufgebracht. Der Drehpunkt des Verriegelungselements 3 liegt nun nicht unten im Bereich des zylindrischen Vorsprungs 5, sondern oben an der Berührungsstelle des Vorsprungs 4 an der Wandung 21 der Oberlippe 27. Der maximal wirksame Hebelarm entspricht dem horizontalen Abstand des in Figur 5 äußerst rechten Punktes der Verriegelungsfläche 13 am hakenförmigen Vorsprung 4 und dem unteren Ende der Oberlippe 27 and der Seitenkante I des Paneels 1. Diese Strecke ist wesentlich kürzer als die Länge des Schenkels 3b, so dass für dasselbe Drehmoment höhere Kräfte beim Lösen notwendig sind, als beim Fügen. Aus Figur 5 ist auch erkennbar, dass beim Einsetzen einer Bewegung entgegen der Fügerichtung ein Verklemmen des unteren Schenkels 3b des Verriegelungselementes 3 in der Nut 16 eintritt, was ebenfalls einer Entriegelung entgegenwirkende Kräfte erzeugt, die nur durch eine Verformung des Verriegelungselementes 3 kompensiert werden können. Bei dem in Figuren 7 bis 10 gezeigten Ausführungsbeispiel verläuft die Seitenkante I des Paneels 1 in ihrem unteren Bereich nicht schräg (vgl. Pos. 23 in Figur 1), sondern die Oberlippe 27 ist im Wesentlichen rechtwinklig ausgebildet. Figur 10 lässt erkennen, dass an der unteren Ecke der Oberlippe 27 beim Drehen des Verriegelungselements 3' entgegen dem Uhrzeigesinn bereits eine Kollision zwischen dem Vorsprung 4 und der Kante stattfindet, die Kräfte erzeugt, die einer Drehung entgegenwirken. Um die notwendigen Auszugskräfte möglichst hoch werden zu lassen, ist es deshalb empfehlenswert, die Oberlippe 27 wie in diesem Ausführungsbeispiel gezeigt, rechtwinklig an der Seitenkante I zu profilieren und keine Abschrägung im unteren Bereich vorzusehen.

Figur 6 zeigt, wie eine Entriegelung der Paneele 1, 2 erfolgen kann, wenn die Verbindung bewusst gelöst werden soll. Hierzu kann ein Stabelement 33 von außen seitlich in die Nut 7 des Paneels 2 eingeführt werden, wodurch der Schenkel 3a abgespreizt und außer Kontakt mit der Nut 7 gelangt, so dass das Paneel 2 nach oben geschwenkt werden kann. Über die Größe der Ausnehmung 6 lässt sich die Elastizität des Schenkels 3a gegenüber dem Schenkel 3b einstellen.

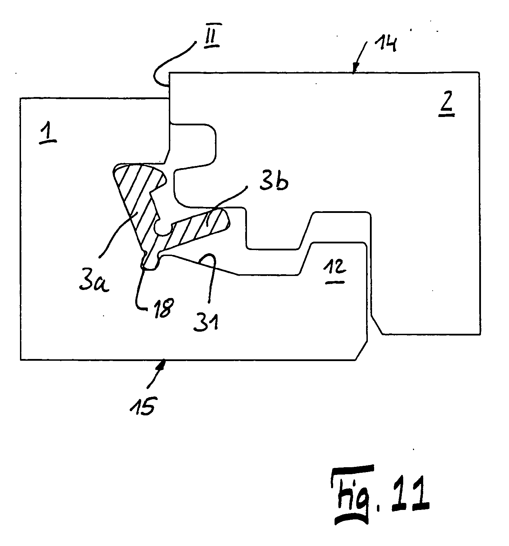

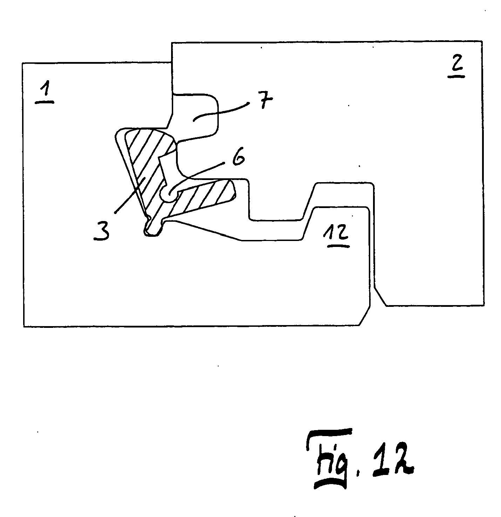

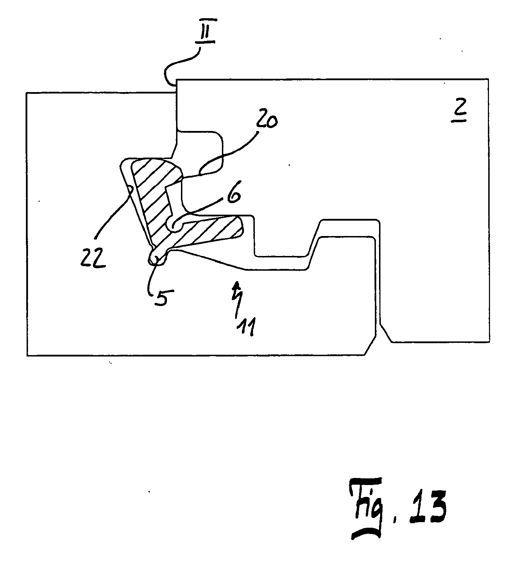

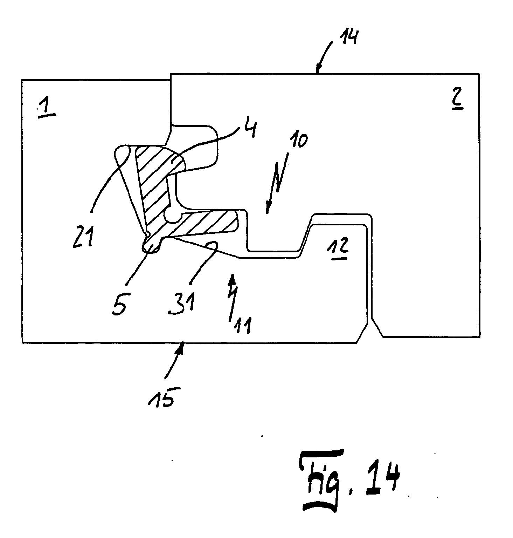

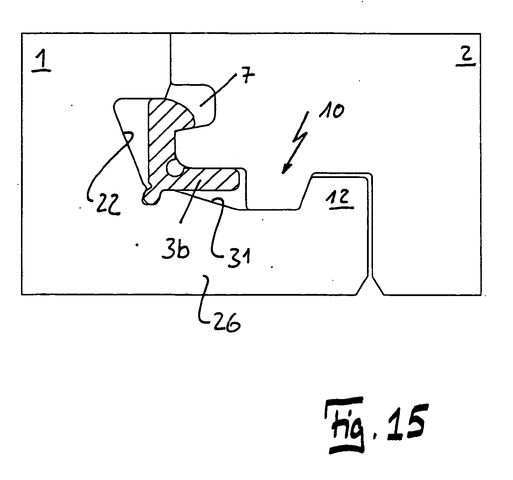

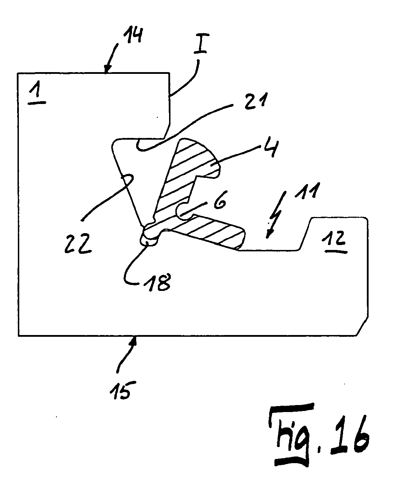

Figuren 11 bis 15 zeigen eine besondere Ausgestaltung der Profilierung 11 des ersten Paneels 1. Die an die Ausnehmung 18 angrenzende Wandung 31 der Profilierung 11 verläuft hier schräg. Dadurch gelangt bei vollständiger Verriegelung der beiden Paneele 1, 2 der untere Schenkel 3b des Verriegelungselementes 3 nicht zur Anlage an der Unterlippe 26. Es hat sich gezeigt, dass bei einer solchen Profilierung 11 das Verriegelungselement 3 besonders leicht in den Freistich 18 eingesetzt werden kann. Zum Einsetzen des Verriegelungselementes 3 wird dieses mit seinem Schenkel 3b zunächst auf die schräge Wandung 31 aufgesetzt und dann in den Freistich 18 eingeschoben (Figur 16). Anschließend wird das Verriegelungselement 3 dann in Richtung der schrägen Wandung 22 entgegen dem Uhrzeigersinn geschwenkt und dort mittels eines Haftklebers befestigt.

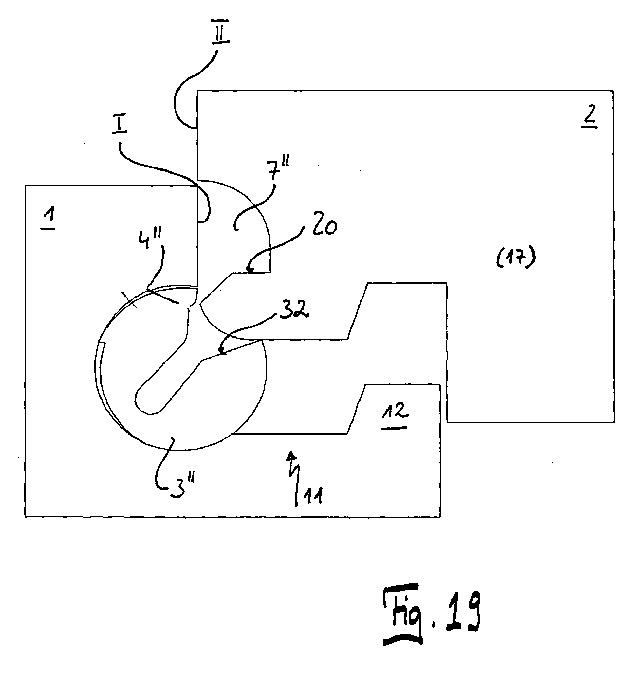

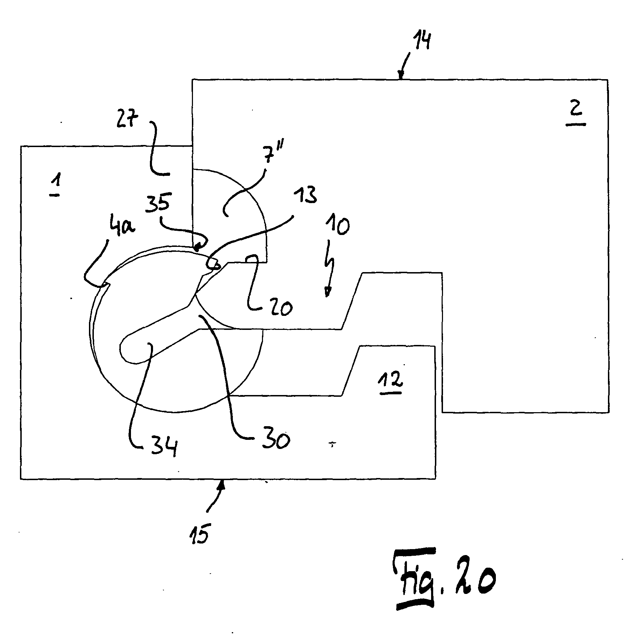

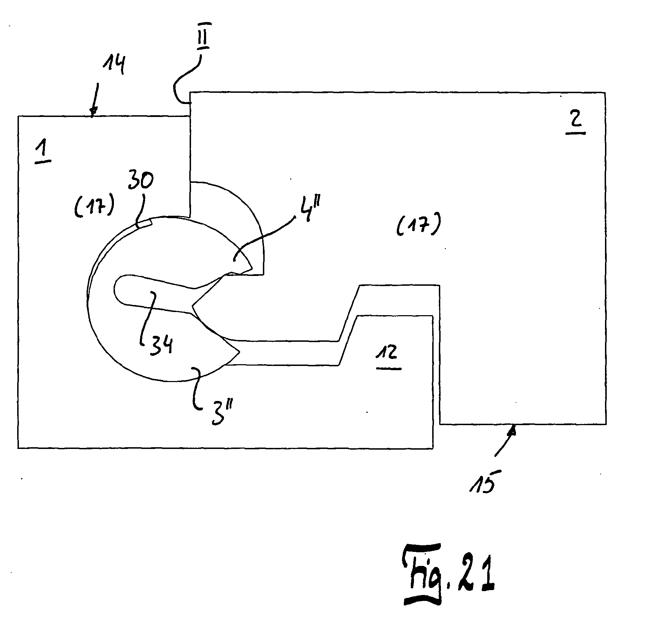

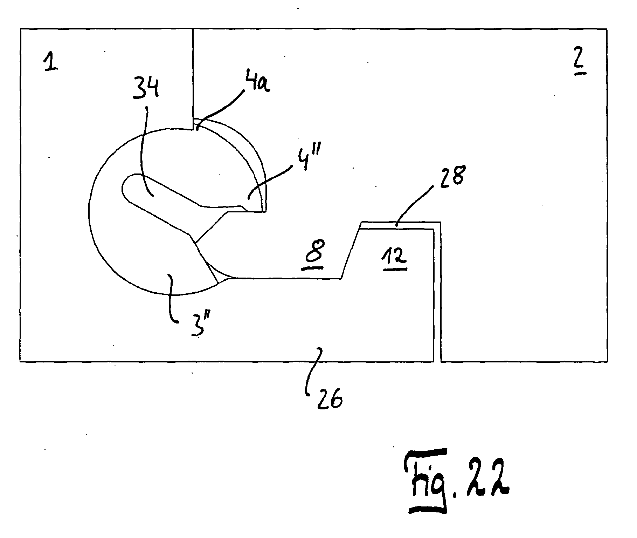

Figuren 19 bis 22 zeigen ein weiteres Ausführungsbeispiel eines Verriegelungselementes 3". Im Querschnitt ist das Verriegelungselement 3" im Wesentlichen kreisförmig ausgebildet. Zur Ausbildung der Verriegelungsfläche 13 und einer dem Schenkel 3b funktionsmäßig analogen Kante 32 ist ein Kreissektor ausgeschnitten. Die Profilierung 11 des Paneels 1 ist so gestaltet, dass eine im Wesentlichen halbzylinderförmige Nut 30 ausgebildet ist, in der das Verriegelungselement 3" eingesetzt ist. Der Verriegelungsvorsprung 4" ist an der der Verriegelungsfläche 13 gegenüberliegenden Außenwandung mit einem Rastabsatz 4a versehen, der - wie Figur 22 zeigt - in vollständig verriegelter Position an der Seitenkante I des Paneels 1 anliegt, wodurch ein Zurückdrehen des Verriegelungselementes 3" verhindert wird. Damit der Rastabsatz 4a hinter die Fügekante 35 schnappen kann, ist das Verriegelungselement 3" elastisch ausgebildet. Zur Erhöhung der Elastizität weist es vorzugsweise einen von dem Kreissektor ausgehenden Schlitz 34 auf, der über das Zentrum des Verriegelungselementes 3' radial hinausragt. Im Querschnitt ist die Verriegelungsausnehmung 7" im Wesentlichen dreieckförmig gestaltet.

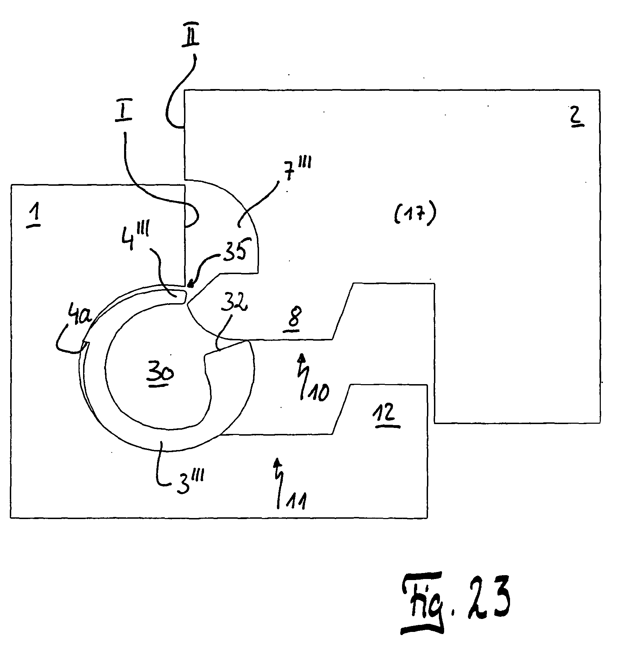

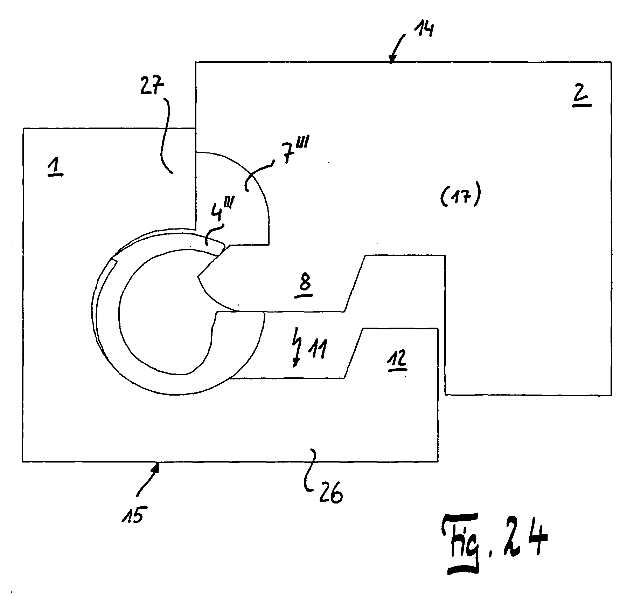

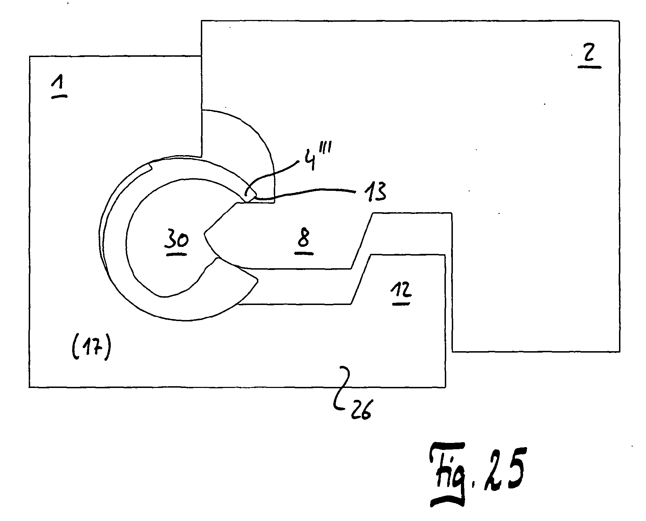

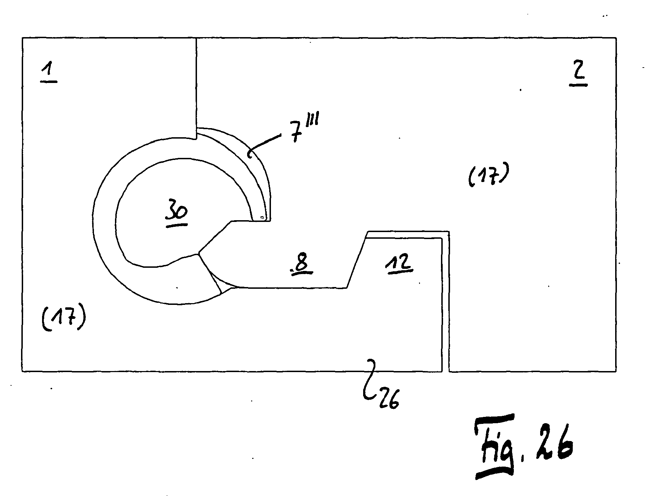

Figuren 23 bis 26 zeigen ein weiteres Ausführungsbeispiel eines Verriegelungselementes 3"'. Das Verriegelungselement 3" ist hier kreisringförmig ausgebildet, wobei der Kreisring natürlich nicht geschlossen ist. Sein eines Ende bildet den Verriegelungsvorsprung 4''' aus und sein anderes Ende die zur Kante 32 des Verriegelungselementes 3" analoge Kante 32. Beide Verriegelungselemente 3" und 3''' können in der halbzylindrischen Nut 30 mittels eines Haftklebers befestigt werden, um ein unbeabsichtigtes Verdrehen während des Transportes zu verhindern. Wird das Paneel 2 vertikal auf das Paneel 1 abgesenkt dreht sich das Verriegelungselement 3", 3''' während der weiteren Absenkbewegung im Uhrzeigersinn und rastet dann mit dem Verriegelungsvorsprung 4", 4''' in die Verriegelungsvertiefung 7", 7''' ein. Auch das im Querschnitt ringförmige Verriegelungselement 3"' ist an dem Verriegelungsvorsprung 4"' mit einem Rastabsatz 4a versehen, der in Folge der Elastizität des Verriegelungselementes 3"' hinter die Fügekante 35 schnappt und in der vollständig verriegelten Lage an der Seitenkante I Paneels 1 anliegt und ein Zurückdrehen des Verriegelungselementes 3''' verhindert.

Alle Verriegelungselemente 3", 3"' können aus Kunststoff, einem Holzwerkstoff-Kunststoff- Gemisch oder aus Metall bestehen. Kunststoff hat den Vorteil, im Spritzkurs- oder Extrusionsverfahren verarbeitet werden zu können. Ein Holzwerkstoff- Kunststoff Gemisch lässt sich im Extrusionsverfahren verarbeiten und ein Verriegelungselement 3", 3'" aus Metall kann in einem Umformverfahren, beispielsweise durch Walzen, hergestellt werden.

### Bezugszeichenliste

- 1: Paneel / Bauplatte
- 2: Paneel / Bauplatte
- 3: Verriegelungselement
- 3a: Schenkel
- 3b: Schenkel
- 3': Verriegelungselement
- 3": Verriegelungselement
- 3'": Verriegelungselement
- 4: Verriegelungsvorsprung
- 4": Verriegelungsvorsprung
- 4'": Verriegelungsvorsprung
- 4a: Rastabsatz
- 5: Vorsprung
- 6: Freistich/Ausnehmung
- 7: Nut / Verriegelungsvertiefung
- 7': Nut / Verriegelungsvertiefung
- 7": Nut / Verriegelungsvertiefung
- 7'": Nut / Verriegelungsvertiefung
- 8: Vorsprung
- 8a: Wandung
- 9: Vertiefung
- 9a: Wandung
- 10: Profilierung
- 11: Profilierung
- 12: Vorsprung
- 13: Verriegelungsfläche
- 14: Oberseite
- 15: Unterseite
- 16: Nut
- 17: Kern
- 18: Freistich
- 19: Unterlippe
- 20: Verriegelungsfläche
- 21: Wandung
- 22: Wandung
- 23: Schräge / Fase
- 24: Nut
- 25: Hinterschneidung
- 26: Unterlippe
- 27: Oberlippe
- 28: Freiraum
- 29: Ausnehmung
- 30: Nut
- 31: Wandung
- 32: Kante
- 33: Stabelement
- 34: Schlitz
- 35: Fügekante

- I: Seitenkante
- II: Seitenkante
- α: Winkel

## Patentansprüche

1. Einrichtung zur Verbindung und Verriegelung zweier Bauplatten (1, 2), insbesondere Fussbodenpaneele, an ihren Längs- und/oder Querseiten in horizontaler und vertikaler Richtung durch eine im wesentlichen vertikale Fügebewegung, wobei die Bauplatten (1, 2) eine Oberseite (14) und eine Unterseite (15) aufweisen, an ihren miteinander zu verbindenden Seitenkanten (I, II) mit zueinander korrespondierenden Profilierungen (10, 11) versehen sind und in der Profilierung (11) der ersten Bauplatte (1) ein Verriegelungselement (3", 3"') mit einem Verriegelungsvorsprung (4", 4"') vorgesehen ist, das mit einer in der Profilierung (10) der zweiten Bauplatte (2) vorgesehenen Verriegelungsvertiefung (7", 7"') derart zusammenwirkt, dass bei der Fügebewegung die beiden Bauplatten (1, 2) selbsttätig in vertikaler Richtung verriegelt werden, wobei das Verriegelungselement (3", 3"') im wesentlichen starr ausgebildet ist und der Verriegelungsvorsprung (4) durch eine Drehbewegung des Verriegelungselements (3", 3"') in die Verriegelungsvertiefung (7", 7"') bringbar ist, **dadurch gekennzeichnet, dass** das Verriegelungselement (3", 3"') im Querschnitt im Wesentlichen kreisförmig ausgebildet ist.

2. Einrichtung nach Anspruch 1, **dadurch gekennzeichnet, dass** der Verriegelungsvorsprung (4", 4"') formschlüssig in der Verriegelungsvertiefung (7", 7"') aufnehmbar ist.

3. Einrichtung nach einem oder mehreren der vorstehenden Ansprüche, **dadurch gekennzeichnet, dass** der Verriegelungsvorsprung (4", 4"') und die Verriegelungsvertiefung (7", 7"') eine Verriegelungsfläche (13, 20) aufweisen, die im verriegelten Zustand der Bauplatten (1, 2) aneinander liegen und dann beide Verriegelungsflächen (13, 20) im Wesentlichen parallel zur Oberseite (14) verlaufen.

4. Einrichtung nach Anspruch 3, **dadurch gekennzeichnet, dass** der Verriegelungsvorsprung (4",4"') einen Rastabsatz (4a) aufweist, der an der Seitenkante I der ersten Bauplatte (1) anliegt, wenn die Verriegelungsflächen (13, 20) an einander anliegen, und das Verriegelungselement (3", 3"') gegen ein Zurückdrehen blockiert.

5. Einrichtung nach einem der vorstehenden Ansprüche, **dadurch gekennzeichnet, dass** das Verriegelungselement (3", 3"') in einer mindestens im Wesentlichen halbzylindrischen Nut (30) in der Seitenkante 1 der ersten Bauplatte (1) angeordnet ist.

6. Einrichtung nach einem oder mehreren der vorstehenden Ansprüche, **dadurch gekennzeichnet, dass** das Verriegelungselement (3", 3"') aus Kunststoff besteht.

7. Einrichtung nach Anspruch 6, **dadurch gekennzeichnet, dass** das Verriegelungselement (3",3"') im Spritzguss- oder Extrusionsverfahren hergestellt ist.

8. Einrichtung nach einem der vorstehenden Ansprüche, **dadurch gekennzeichnet, dass** das Verriegelungselement (3",3"') aus einem Holzwerkstoff- Kunststoff-Gemisch besteht.

9. Einrichtung nach Anspruch 8, **dadurch gekennzeichnet, dass** das Verriegelungselement (3" ,3"') im Extrusionsverfahren hergestellt worden ist.

10. Einrichtung nach einem oder mehreren der Ansprüche 1 bis 5, **dadurch gekennzeichnet, dass** das Verriegelungselement (3", 3"') aus Metall besteht.

11. Einrichtung nach Anspruch 10, **dadurch gekennzeichnet, dass** das Verriegelungselement (3", 3"') in einem Umformverfahren hergestellt worden ist.

12. Einrichtung nach Anspruch 11, **dadurch gekennzeichnet, dass** das Verriegelungselement (3", 3"') durch Walzen hergestellt worden ist.

13. Einrichtung nach Anspruch 1, **dadurch gekennzeichnet, dass** der Kern (17) der Bauplatten (1, 2) aus einem Holzwerkstoff oder Holzwerkstoff-Kunststoff-Gemisch, insbesondere HDF oder MDF, besteht.

14. Einrichtung nach Anspruch 5, **dadurch gekennzeichnet, dass** das Verriegelungselement (3", 3"') in der Nut (30) lösbar befestigt ist.

15. Einrichtung nach Anspruch 14, **dadurch gekennzeichnet, dass** das Verriegelungselement (3", 3"') mittels eines Haftklebers in der Nut (30) befestigt ist.

## Claims

1. Device for connecting and locking two structural panels (1, 2), in particular floor panels, on their longitudinal and/or transverse sides in the horizontal and vertical direction by a substantially vertical joining movement, wherein the structural panels (1, 2) have an upper side (14) and a lower side (15), and are provided with profiles (10, 11) that correspond with one another at their side edges (I, II) to be connected to one another and, in the profile (11) of the first structural panel (1), a locking element (3", 3"') with a locking projection (4", 4"') is provided, which cooperates with a locking indentation (7", 7"') provided in the profile (10) of the second structural panel (2) in such a way that, during the joining movement, the two structural panels (1, 2) are automatically locked in the vertical direction, the locking element (3", 3"') being substantially rigid and it being possible to bring the locking projection (4) into the locking indentation (7", 7"') by a rotary movement of the locking element (3", 3"'), **characterised in that** the locking element (3", 3"') is substantially circular in cross-section.

2. Device according to claim 1, **characterised in that** the locking projection (4", 4"') can be positively received in the locking indentation (7", 7"').

3. Device according to any one or more of the preceding claims, **characterised in that** the locking projection (4", 4"') and the locking indentation (7", 7"') have a locking face (13, 20), which faces abut one another when the structural panels (1, 2) are in the locked state and the two locking faces (13, 20) then extend substantially parallel to the upper side (14).

4. Device according to claim 3, **characterised in that** the locking projection (4", 4"') has a latching shoulder (4a), which rests on the side edge (I) of the first structural panel (1) when the locking faces (13, 20) abut one another, and blocks the locking element (3", 3"') against turning back.

5. Device according to any one of the preceding claims, **characterised in that** the locking element (3", 3"') is arranged in an at least substantially semi-cylindrical groove (30) in the side edge (I) of the first structural panel (1).

6. Device according to any one or more of the preceding claims, **characterised in that** the locking element (3", 3"') consists of plastics material.

7. Device according to claim 6, **characterised in that** the locking element (3", 3"') is produced by the injection-moulding or extrusion method.

8. Device according to any one of the preceding claims, **characterised in that** the locking element (3", 3"') consists of a wood-based material/plastics material mixture.

9. Device according to claim 8, **characterised in that** the locking element (3", 3"') has been produced by the extrusion method.

10. Device according to any one or more of claims 1 to 5, **characterised in that** the locking element (3", 3"') consists of metal.

11. Device according to claim 10, **characterised in that** the locking element (3", 3"') has been produced by a forming method.

12. Device according to claim 11, **characterised in that** the locking element (3", 3"') has been produced by rolling.

13. Device according to claim 1, **characterised in that** the core (17) of the structural panels (1, 2) consists of a wood-based material or wood-based material/plastics material mixture, in particular HDF or MDF.

14. Device according to claim 5, **characterised in that** the locking element (3", 3"') is releasably fixed in the groove (30).

15. Device according to claim 14, **characterised in that** the locking element (3", 3"') is fastened in the groove (30) by means of a contact adhesive.

## Revendications

1. Dispositif pour relier et verrouiller deux panneaux de construction (1, 2), en particulier panneaux de plancher, sur leurs côtés longitudinaux et/ou transversaux dans la direction horizontale et verticale par un mouvement d'assemblage sensiblement vertical, les panneaux de construction (1, 2) présentant une face supérieure (14) et une face inférieure (15), étant munis de profilages (10, 11) se correspondant mutuellement sur leurs bords latéraux (I, II) à relier ensemble, et il est prévu dans le profilage (11) du premier panneau de construction (1) un élément de verrouillage (3", 3"') ayant une saillie de verrouillage (4", 4"') et coopérant avec un renfoncement de verrouillage (7", 7"') prévu dans le profilage (10) du deuxième panneau de construction (2), de façon que lors du mouvement d'assemblage, les deux panneaux de construction (1, 2) soient verrouillés automatiquement dans la direction verticale, l'élément de verrouillage (3", 3"') étant formé sensiblement rigide et la saillie de verrouillage (4) pouvant être amenée dans le renfoncement de verrouillage (7", 7"') par un mouvement rotatif de l'élément de verrouillage (3", 3"'), **caractérisé en ce que** l'élément de verrouillage (3", 3"') est formé à section sensiblement circulaire.

2. Dispositif selon la revendication 1, **caractérisé en ce que** la saillie de verrouillage (4", 4"') peut être logée en liaison par conjugaison de forme dans le renfoncement de verrouillage (7", 7"').

3. Dispositif selon l'une ou plusieurs des revendications précédentes, **caractérisé en ce que** la saillie de verrouillage (4", 4"') et le renfoncement de verrouillage (7", 7"') présentent une surface de verrouillage (13, 20) qui se trouvent l'une contre l'autre lorsque les panneaux de construction (1, 2) sont à l'état verrouillé, les deux surfaces de verrouillage (13, 20) s'étendant alors sensiblement parallèlement à la face supérieure (14).

4. Dispositif selon la revendication 3, **caractérisé en ce que** la saillie de verrouillage (4", 4"') présente un talon d'arrêt (4a) qui est adjacent au bord latéral I du premier panneau de construction (1) lorsque les surfaces de verrouillage (13, 20) sont adjacentes l'une à l'autre, et qui bloque l'élément de verrouillage (3", 3"') contre une rotation en arrière.

5. Dispositif selon l'une quelconque des revendications précédentes, **caractérisé en ce que** l'élément de verrouillage (3", 3"') est agencé dans une rainure (30) au moins sensiblement semi-cylindrique dans le bord latéral I du premier panneau de construction (1).

6. Dispositif selon l'une ou plusieurs des revendications précédentes, **caractérisé en ce que** l'élément de verrouillage (3", 3"') est en matériau synthétique.

7. Dispositif selon la revendication 6, **caractérisé en ce que** l'élément de verrouillage (3", 3"') est fabriqué par un procédé d'extrusion ou de moulage par injection.

8. Dispositif selon l'une quelconque des revendications précédentes, **caractérisé en ce que** l'élément de verrouillage (3", 3"') est en un mélange de matériau dérivé du bois et de matériau synthétique.

9. Dispositif selon la revendication 8, **caractérisé en ce que** l'élément de verrouillage (3", 3"') a été fabriqué par un procédé d'extrusion.

10. Dispositif selon l'une ou plusieurs des revendications 1 à 5, **caractérisé en ce que** l'élément de verrouillage (3", 3"') est en métal.

11. Dispositif selon la revendication 10, **caractérisé en ce que** l'élément de verrouillage (3", 3"') a été fabriqué par un procédé de formage.

12. Dispositif selon la revendication 11, **caractérisé en ce que** l'élément de verrouillage (3", 3"') a été fabriqué par laminage.

13. Dispositif selon la revendication 1, **caractérisé en ce que** l'âme (17) des panneaux de construction (1, 2) est en un matériau dérivé du bois ou en un mélange de matériau dérivé du bois et de matériau synthétique, en particulier HDF ou MDF.

14. Dispositif selon la revendication 5, **caractérisé en ce que** l'élément de verrouillage (3", 3"') est fixé de façon amovible dans la rainure (30).

15. Dispositif selon la revendication 14, **caractérisé en ce que** l'élément de verrouillage (3", 3"') est fixé dans la rainure (30) au moyen d'une émulsion d'accrochage.
